# EUROPEAN PATENT APPLICATION

(11) **EP 3 145 236 A1**
(43) Date of publication of application: **22.03.2017**
(21) Application number: 16188930.8
(22) Date of filing: 15.09.2016
(51) Int. Cl.: H04W 24/02

(54) **DEVICE AND METHOD OF HANDLING INFORMATION REPORTING IN ENHANCED COVERAGE AND NORMAL COVERAGE**

(30) Priority: 16.09.2015 US 201562219147 P
(71) Applicant: HTC Corporation, Taoyuan City 330 (TW)
(72) Inventor: Wu, Chih-Hsiang, Taoyuan City 330 (TW)
(74) Representative: Ljungberg, Robert

(57) **Abstract**

A communication device for handling information reporting comprises a storage unit for storing instructions and a processing circuit coupled to the storage unit. The processing circuit is configured to execute the instructions stored in the storage unit. The instructions comprise performing a communication procedure; obtaining a first result when performing the communication procedure in enhanced coverage; and transmitting a first message comprising the first result and indicating that the first result is obtained in the enhanced coverage to a network.

## Description

### Cross Reference To Related Applications

This application claims the benefit of U.S. Provisional Application No. 62/219,147 filed on Sep. 16, 2015, which is incorporated herein by reference.

### Background of the Invention

### 1. Field of the Invention

The present invention relates to a device and a method used in a wireless communication system, and more particularly, to a device and a method of handling information reporting in enhanced coverage and normal coverage.

### 2. Description of the Prior Art

A long-term evolution (LTE) system provides high data rate, low latency, packet optimization, and improved system capacity and coverage. In the LTE system, a radio access network known as an evolved universal terrestrial radio access network (E-UTRAN) includes at least one evolved Node-B (eNB) for communicating with at least one user equipment (UE), and for communicating with a core network including a mobility management entity (MME), a serving gateway, etc., for Non-Access Stratum (NAS) control.

A LTE-advanced (LTE-A) system is an evolution of the LTE system. The LTE-A system extends cell coverage of an eNB, increases peak data rate and throughput, and includes advanced techniques, such as carrier aggregation (CA), licensed-assisted access (LAA) using LTE, etc.

According to the prior art, a network (e.g., eNB) does not know in which situation control information is generated, after receiving the control information from a UE in enhanced coverage (i.e., using repetitions to communicate with a network) or normal coverage (not using repetitions to communicate with the network). Thus, the network is not able to optimize system parameter(s) for the UE according to the control information, because the network does not know the situation where the control information is generated. Thus, how to handle information reporting in enhanced coverage and normal coverage is an important problem to be solved.

### Summary of the Invention

The present invention therefore provides a communication device and method for handling information reporting in enhanced coverage and normal coverage to solve the abovementioned problem.

A communication device for handling information reporting comprises a storage unit for storing instructions and a processing circuit coupled to the storage unit. The processing circuit is configured to execute the instructions stored in the storage unit. The instructions comprise performing a communication procedure; obtaining a first result when performing the communication procedure in enhanced coverage; and transmitting a first message comprising the first result and indicating that the first result is obtained in the enhanced coverage to a network.

These and other objectives of the present invention will no doubt become obvious to those of ordinary skill in the art after reading the following detailed description of the preferred embodiment that is illustrated in the various figures and drawings.

### Brief Description of the Drawings

Fig. 1 is a schematic diagram of a wireless communication system according to an example of the present invention.
Fig. 2 is a schematic diagram of a communication device according to an example of the present invention.
Fig. 3 is a flowchart of a process according to an example of the present invention.

### Detailed Description

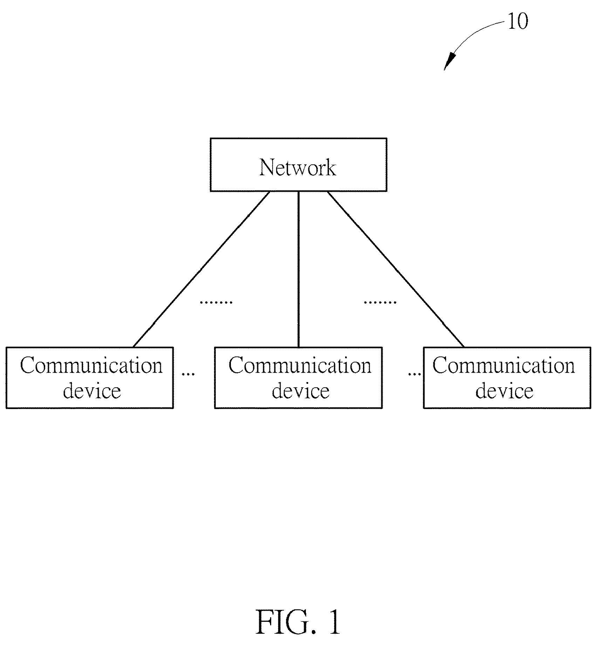

Fig. 1 is a schematic diagram of a wireless communication system 10 according to an example of the present invention. The wireless communication system 10 is briefly composed of a network and a plurality of communication devices. The network and a communication device may communicate with each other via one or more carriers of licensed band(s) and/or unlicensed band(s). The network and the communication device may simultaneously communicate with each other via multiple cells (e.g., multiple carriers) including a primary cell (PCell) and one or more secondary cells (SCells). The abovementioned cells may be operated in the same or different frame structure types, or in the same or different duplexing modes, i.e. frequency-division duplexing (FDD) and time-division duplexing (TDD). For example, the PCell may be operated on a licensed carrier, while the SCell may be operated on an unlicensed carrier.

In Fig. 1, the network and the communication devices are simply utilized for illustrating the structure of the wireless communication system 10. Practically, the network may be an narrowband (NB) internet of things (IoT) network, an evolved universal terrestrial radio access network (E-UTRAN) including at least one evolved Node-B (eNB) and/or at least one relay in a long term evolution (LTE) system, a LTE-Advanced (LTE-A) system or an evolution of the LTE-A system. The network may be a fifth generation (5G) network including at least one 5G base station (BS) which employs orthogonal frequency-division multiplexing (OFDM) and/or non-OFDM, and transmission time interval (TTI) shorter than 1ms (e.g. 100 or 200 microseconds) for communication with the communication devices. In general, a base station (BS) may also be used to refer any of the eNB and the 5G BS.

A communication device may be a user equipment (UE), a machine type communication (MTC) device, a mobile phone, a laptop, a tablet computer, an electronic book, a portable computer system, a vehicle, an aircraft. In addition, the network and the communication device can be seen as a transmitter or a receiver according to direction (i.e., transmission direction), e.g., for an uplink (UL), the communication device is the transmitter and the network is the receiver, and for a downlink (DL), the network is the transmitter and the communication device is the receiver.

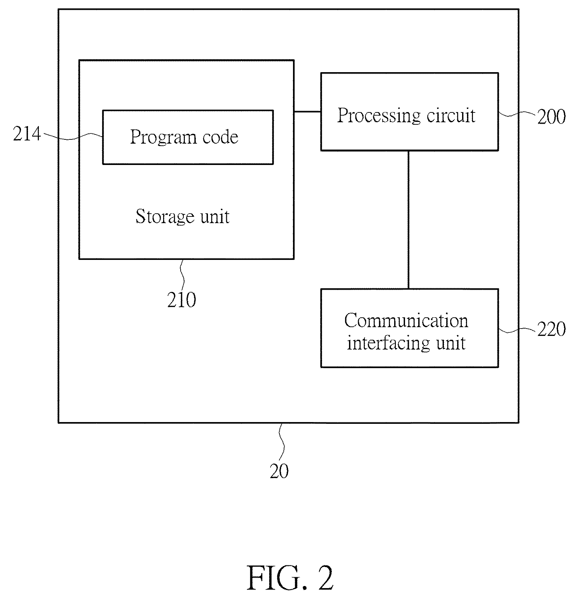

Fig. 2 is a schematic diagram of a communication device 20 according to an example of the present invention. The communication device 20 may be a communication device or the network shown in Fig. 1, but is not limited herein. The communication device 20 may include a processing circuit 200 such as a microprocessor or Application Specific Integrated Circuit (ASIC), a storage unit 210 and a communication interfacing unit 220. The storage unit 210 may be any data storage device that may store a program code 214, accessed and executed by the processing circuit 200. Examples of the storage unit 210 include but are not limited to a subscriber identity module (SIM), read-only memory (ROM), flash memory, random-access memory (RAM), hard disk, optical data storage device, non-volatile storage unit, non-transitory computer-readable medium (e.g., tangible media), etc. The communication interfacing unit 220 is preferably a transceiver and is used to transmit and receive signals (e.g., data, messages and/or packets) according to processing results of the processing circuit 200.

In the following embodiments, a UE is used to represent a communication device in Fig. 1, to simplify the illustration of the embodiments.

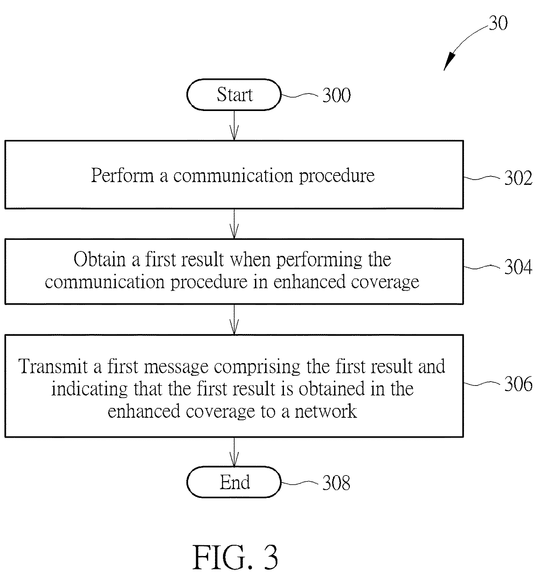

Fig. 3 is a flowchart of a process 30 according to an example of the present invention. The process 30 may be utilized in a UE, for handling information reporting. The process 30 may be compiled into the program code 214 and includes the following steps:
Step 300: Start.
Step 302: Perform a communication procedure.
Step 304: Obtain a first result when performing the communication procedure in enhanced coverage.
Step 306: Transmit a first message comprising the first result and indicating that the first result is obtained in the enhanced coverage to a network.
Step 308: End.

According to the process 30, the UE performs a communication procedure, and obtains a first result when performing the communication procedure in enhanced coverage. Then, the UE transmits a first message comprising the first result and indicating that the first result is obtained in the enhanced coverage to a network. The communication procedure may include a measurement procedure, a random access procedure, a radio link monitoring and/or a radio resource control (RRC) connection establishment procedure.

When the UE performs the communication procedure in normal coverage, the UE obtains a second result. The UE transmits the second result in the first message or a second message. In one example, the UE does not indicate that the second result is obtained in the enhanced coverage in the first message or the second message. In another example, the UE indicates that the second result is obtained in the normal coverage in the first message or the second message.

The first result or the second result may include a measurement result, a random access channel (RACH) report, information of a radio link failure (RLF), information of a handover failure, and/or a RRC connection establishment failure, which corresponds to the above procedures, respectively.

In one example, the UE indicates that the first result is obtained in the enhanced coverage in the first message by including an indication of the enhanced coverage, an enhanced coverage level or an enhanced coverage mode of the enhanced coverage, or the number of a plurality of repetitions for performing the communication procedure in the first message. The UE in the enhanced coverage with an enhanced coverage level or an enhanced coverage mode may apply a corresponding configuration (e.g., random access configuration or the number of repetitions). In one example, the network configures the corresponding configuration, the enhanced coverage level and/or the enhanced coverage mode, to the UE in DL control information, in a dedicated RRC message or in broadcast system information. In another example, the UE may determine the enhanced coverage level or the enhanced coverage mode to be applied according to the measurement result and/or criteria configured by the network. Thus, the network is able to optimize at least one system parameter (e.g. the number of repetitions) for the communication procedure performed by the UE in the enhanced coverage according to the first message, because the network knows the situation where the first result is obtained.

In one example, the first message or the second message is a measurement report message, and the network transmits a measurement configuration to the UE to configure the UE to transmit the measurement report message. In another example, the first message or the second message is a UE information response message in response to a UE information request message received from the network.

Realization of the process 30 is not limited to the above description. The following examples may be applied to the process 30.

In one example, a UE measures the power or energy of reference signal(s) in a subframe or the plurality of subframes to obtain a measurement result, e.g., a signal to interference ratio (SINR) value, a reference signal strength indicator (RSSI) value, a reference signal received power (RSRP) value or a reference signal received quality (RSRQ) value. Each of the plurality of subframes may include a reference signal. The UE transmits a message including the measurement result to the network. The UE indicates in the message that the measurement result is measured in the enhanced coverage, or that the measurement result is measured in the enhanced coverage by including the enhanced coverage level or the enhanced coverage mode when obtaining the measurement result.

An example for logged minimization of drive tests (MDT) is illustrated as follows. A UE logs the measurement result, and the UE may also log an enhanced coverage level or an enhanced coverage mode where the measurement result is obtained. In one example, the UE logs a first measurement result in the enhanced coverage with a first enhanced coverage level, and associates the first enhanced coverage level with the first measurement result. The UE also logs a second measurement result in the enhanced coverage with a second enhanced coverage level, and associates the second enhanced coverage level with the second measurement result. The UE transmits both of the measurement results and the associated enhanced coverage levels in a message to the network. If the UE has logged a third measurement result in the normal coverage, the UE may transmit the third measurement result in the message without indicating that the third result is obtained in the enhanced coverage mode or explicitly indicating that the third result is obtained in the normal coverage.

In one example, a UE in the enhanced coverage or the normal coverage performs radio link monitoring by monitoring DL radio link of a cell (i.e., serving cell) of the network to detect the DL radio link quality of the cell. The UE in the enhanced coverage accumulates or collects transmissions in a plurality of subframes transmitted via the cell by the network, and estimates the DL radio link quality according to the transmissions in the plurality of subframes. If the UE determines the DL radio link quality is worse than a predetermined level according to one or more criterions, the UE determines that a RLF occurs. The UE transmits a message including information of the RLF to the network. The information of the RLF may further include a measurement result of the cell and/or a cell identity of the cell. In the message, the UE indicates that the RLF occurs in the enhanced coverage. In one example, the UE may indicate the RLF occurs in the enhanced coverage by including the enhanced coverage level or the enhanced coverage mode when estimating the DL radio link quality in the message. If the RLF occurs in the normal coverage, the UE may indicate that the RLF occurs in the normal coverage in the message, e.g., by not indicating the enhanced coverage in the message.

In one example, the UE compares the DL radio link quality with thresholds Qout and Qin in the radio link monitoring. Each of the transmissions in the plurality of subframes for obtaining the DL radio link quality may include a reference signal (e.g., cell-specific reference signal, channel state information reference signal, or discovery reference signal) or a control signal.

In one example, a UE in the enhanced coverage or the normal coverage may perform a handover procedure in response to a handover command sent via a first cell by the network. The UE in the enhanced coverage accumulates or collects transmissions in a plurality of subframes transmitted by the network, to successfully receive the handover command. After receiving the handover command, the UE tries to connect to a second cell indicated in the handover command. The UE may fail the handover procedure, when the UE is not able to transmit a handover complete or complete a random access procedure to the second cell successfully. The UE transmits a message including information of a handover failure (HOF) to the network. The information of the HOF may further include a measurement result of the first cell and/or the second cell and/or cell identit(ies) of the first cell and/or the second cell. In the message, the UE indicates that the HOF occurs in the enhanced coverage. In one example, the UE indicates that the HOF occurs in the enhanced coverage by including the enhanced coverage level or the enhanced coverage mode. If the HOF occurs in the normal coverage, the UE may indicate that the HOF occurs in the normal coverage in the message, e.g. by not indicating the enhanced coverage in the message.

In one example, a UE in the enhanced coverage performs a random access procedure by transmitting a plurality of repetitions of a random access preamble in a plurality of subframes so that the network is able to collect the plurality of repetitions of the random access preamble to detect the random access preamble. When the UE performs the random access procedure, the UE stores a result (e.g., a random access channel (RACH) report) related to the random access procedure. The UE transmits a message including the result to the network. The result may indicate the number of the plurality of random access preamble transmissions and/or whether a contention resolution is successful or not. In the enhanced coverage, every random access preamble transmission consists of a plurality of repetitions. In the normal coverage, every random access preamble transmission may only consist of a single repetition (no repetitions). In addition, the UE may indicate in the message that the result is obtained in the enhanced coverage since the random access procedure is performed in the enhanced coverage. In one example, the UE includes an enhanced coverage level or an enhanced coverage mode of the enhanced coverage or an indication of the enhanced coverage in the message to indicate that the random access procedure is performed in the enhanced coverage. In another example, the UE indicates in the message that the result is obtained in the enhanced coverage by indicating the number of the plurality of repetitions. Thus, the network knows how many repetitions are used for the random access procedure according to the indication of the enhanced coverage, the enhanced coverage level, the enhanced coverage mode or the number of repetitions. If the network receives the information indicating the contention resolution is not successful from the UE or a plurality of UEs, the network may configure a larger number of repetitions (i.e., larger than the number of repetitions for transmitting the random access preamble) for the enhanced coverage level so that the UE transmits more repetitions of the random access preamble in a next random access procedure for the enhanced coverage level or the enhanced coverage mode. If the UE is in the normal coverage (i.e., transmission is performed without using repetition), the UE may not include any information (e.g., the number of the repetitions, the indication of the enhanced coverage, the enhanced coverage level or the enhanced coverage mode, etc.) indicating the enhanced coverage, or may indicate in the message that the random access procedure is performed in the normal coverage.

In one example, a UE in the enhanced coverage performs a RRC connection establishment procedure to establish a connection with the network for signaling transmission or data transmission. During the RRC connection establishment procedure, the UE transmits a plurality of repetitions of a random access preamble in a plurality of subframes so that the network is able to collect the plurality of repetitions of the random access preamble to detect the random access preamble. If the network detects the random access preamble by combining the plurality of repetitions, the network transmits a plurality of repetitions of a random access response (RAR) to the UE. After the UE receives the RAR from the plurality of repetitions of the RAR, the UE transmits a plurality of repetitions of a RRC connection request message according to a UL grant in the RAR. After the network receives the RRC connection request message, the network transmits a plurality of repetitions of a RRC connection setup message which includes information for configuring a RRC connection between the UE and the network. The UE may fail the RRC connection establishment procedure due to e.g., a random access failure (e.g., not receiving the RAR or contention resolution is failed) or not receiving the RRC connection setup message. If the RRC connection establishment procedure is failed, the UE stores information which includes the plurality of repetitions of the random access preamble (as described above), the plurality of repetitions of the RRC connection request, and/or whether a contention resolution is successful or not. The information may further include measurement results or information of a cell (e.g., cell identity of the cell) of the network to which the UE transmit the random access preamble.

Then, the UE transmits a message which includes the information to the network. In addition, the UE may indicate in the message that the RRC connection establishment failure is obtained in the enhanced coverage. In one example, the UE indicates an enhanced coverage level or an enhanced coverage mode of the enhanced coverage in the message. In another example, the UE indicates the number of the plurality of repetitions of the random access preamble and/or the number of the plurality of repetitions of the RRC connection request. Thus, the network knows how many repetitions are used for the RRC connection establishment procedure according to the enhanced coverage, the enhanced coverage level, the enhanced coverage level or the number of repetitions.

If the information indicates that the contention resolution is not successful, the network may configure a larger number of repetitions (i.e., larger than the number of repetitions for transmitting the random access preamble) so that the UE transmits more repetitions of the random access preamble in a next RRC connection establishment procedure. If the information indicates that the contention resolution is successful, the network may configure a larger number of repetitions (i.e., larger than the number of repetitions for transmitting the connection request message) so that the UE transmits more repetitions of the connection request message in a next RRC connection establishment procedure. If the UE is in the normal coverage (e.g., transmission is performed without using repetition), the UE neither includes in the message the number of the plurality of repetitions for transmitting the random access preamble and the number of the plurality of repetitions for transmitting the RRC connection request message in the message, nor indicates in the message that the RRC connection establishment procedure is performed in the enhanced coverage.

Those skilled in the art should readily make combinations, modifications and/or alterations on the abovementioned description and examples. The abovementioned description, steps and/or processes including suggested steps can be realized by means that could be hardware, software, firmware (known as a combination of a hardware device and computer instructions and data that reside as read-only software on the hardware device), an electronic system, or combination thereof. An example of the means may be the communication device 20. Any of the processes above may be compiled into the program code 214.

To sum up, the present invention provides a communication device and method of handling information reporting in enhanced coverage and normal coverage. The communication device includes information of the enhanced coverage or the normal coverage for reporting a result of performing a communication procedure in a message. Thus, the network knows the situation where the result is obtained. As a result, the network is able to optimize at least one system parameter for the communication device according to the message.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A communication device for handling information reporting, comprising:
a storage unit (210), for storing instructions; and
a processing circuit (200), coupled to the storage unit (210), wherein the storage unit (210) stores, and the processing circuit (200) is configured to execute, the instructions of:
performing a communication procedure;
obtaining a first result when performing the communication procedure in enhanced coverage; and
transmitting a first message comprising the first result to a network; and
indicating the first result is obtained in the enhanced coverage to the network.

2. The communication device of claim 1, wherein the communication procedure comprises a measurement procedure, and the first result comprises a measurement result.

3. The communication device of claim 1 or 2, wherein the first message is a measurement report message, and the communication device is configured by the network to transmit the first message.

4. The communication device according to any one of the preceding claims, wherein the communication procedure comprises a random access procedure, and the first result indicates a number of random access preamble transmissions and whether or not a contention resolution for the random access procedure is successful.

5. The communication device according to any one of the preceding claims, wherein the communication procedure comprises a radio link monitoring procedure, and the first result comprises information of a radio link failure.

6. The communication device according to any one of the preceding claims, wherein the communication procedure comprises a radio resource control (RRC) connection establishment procedure, and the first result comprises a RRC connection establishment failure.

7. The communication device according to any one of the preceding claims, wherein the first message comprises an enhanced coverage level or an enhanced coverage mode of the enhanced coverage.

8. The communication device according to any one of the preceding claims, wherein the first message is a user equipment (UE) information response message in response to a UE information request message received from the network.

9. The communication device according to any one of the preceding claims, wherein the first message comprises a number of a plurality of repetitions for performing the communication procedure, and the number of the plurality of repetitions indicates that the communication procedure is performed in the enhanced coverage.

10. The communication device of claim 9, wherein the number of the plurality of repetitions is configured by the network, or is determined by the communication device.

11. The communication device of claim 9, wherein each of the plurality of repetitions comprises a reference signal.

12. The communication device of claim 1, wherein the first message comprises a number of a plurality of repetitions of a random access preamble transmitted by the communication device in the communication procedure, and the number of the plurality of repetitions indicates that the communication procedure is performed in the enhanced coverage.

13. The communication device of claim 1, wherein the storage unit (210) further stores, and the processing circuit (200) is further configured to execute, the instruction of:
obtaining a second result when performing the communication procedure in normal coverage, wherein the first message comprises the second result and indicates that the second result is obtained in the normal coverage.

14. The communication device of claim 1, wherein the storage unit (210) further stores, and the processing circuit (200) is further configured to execute, the instructions of:
obtaining a second result when performing the communication procedure in normal coverage; and
transmitting the second result in a second message comprising the second result and indicating that the second result is obtained in the normal coverage.
